# EUROPEAN PATENT APPLICATION

(11) **EP 1 464 424 A1**
(43) Date of publication of application: **06.10.2004**
(21) Application number: 04007936.0
(22) Date of filing: 01.04.2004
(51) Int. Cl.: B23B 31/103

(54) **A chuck for securing the shank of a tapping tool**

(30) Priority: 02.04.2003 IT TO20030255
(71) Applicant: S.C.M. S.r.l., 15020 Murisengo (Alessandria) (IT)
(72) Inventor: Masoero, Angelo, 15020 Murisengo (Alessandria) (IT)
(74) Representative: Gerbino, Angelo

(57) **Abstract**

A chuck for securing the shank (10) of a tapping tool (12) comprises a body (14) with a cavity (20) extending longitudinally along an axis (22), open at one end for receiving the shank (10), a slot (28) being formed through the side wall of the body (14), in communication with the cavity (20); a sleeve (30) mounted externally on the body (14) for sliding coaxially along the axis (22); and a retaining member (42) housed with longitudinal play (60) in the slot (28) and having on its inwardly facing surface a protuberance (56) able to penetrate into the cavity (20). The retaining member (42) is able to interfere by means of at least one part of its outwardly facing surface with the internal surface of the sleeve (30), thereby causing the protuberance (56) to penetrate into the cavity (20) as well as, respectively, to withdraw it as a result of longitudinal sliding movements of the sleeve (30).

## Description

The present invention relates to a chuck for securing the shank of a tapping tool.

Known chucks of this type have a cylindrical body, with a hollow seat formed in it parallel to the axis thereof for housing the shank of the tool. A radial hole is also formed in the side wall of the cylindrical body, which is in communication with the seat and has a movable member mounted therein. The position of this member can be adjusted radially, whereby it can selectively protrude into the cavity so that its projecting end can engage with a notch in the surface of the shank of the tool, thereby locking it in the hollow cavity.

Such a locking system is completely rigid and prevents any axial movement of the tool. However, limited axial movement would be desirable at certain stages of the operation of the tool, in particular during reversal of its rotation.

Other types of chuck have therefore been proposed which give the tool the possibility of some limited axial movement. However, this effect is achieved at the price of a structure which has a plurality of additional components interposed between the body of the chuck and the tool, making it both complicated and expensive to produce.

The object of the present invention is therefore to provide a chuck having a simple and economical structure, with no components other than a retaining member interposed between the hollow body and the tool, but which allows this latter some limited axial movement.

This object is achieved according to the invention by providing a chuck having the characteristics claimed specifically in Claim 1 which follows. Preferred embodiments of the chuck of the invention are described in the dependent Claims 2 to 11.

The chuck of the invention thus consists of only three basic elements, that is a hollow body, a retaining member and a sleeve, and does not require the interposition of any additional components between the hollow body and the tool. At the same time, the fact that the retaining member is housed with play in the associated slot allows the shank of the tapping tool some axial movement.

A further subject of the invention is constituted by an assembly as described in Claim 12, which follows.

Further advantages and characteristics of the present invention will become apparent from the detailed description which follows, provided purely by way of non-limitative example, with reference to the appended drawings, in which:

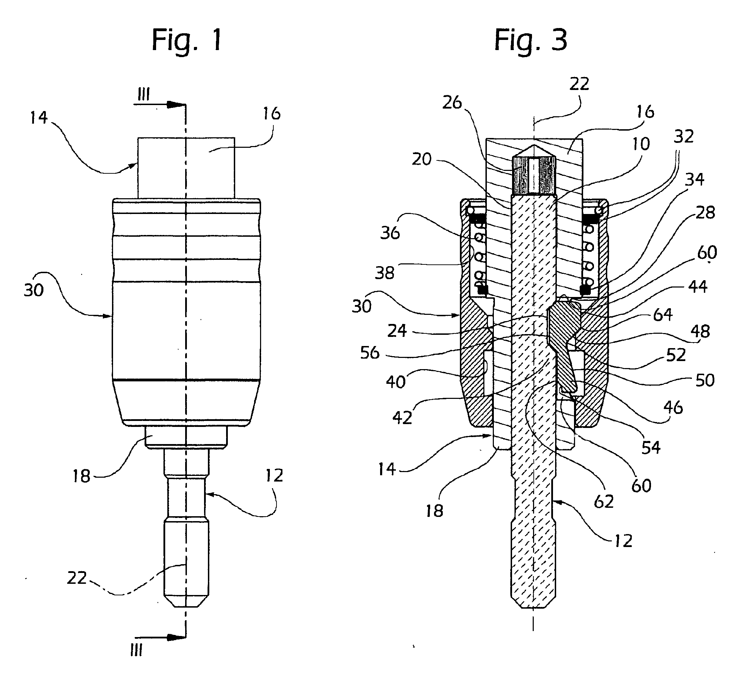

Figure 1 is a side elevation of a chuck of the invention holding a tapping tool;

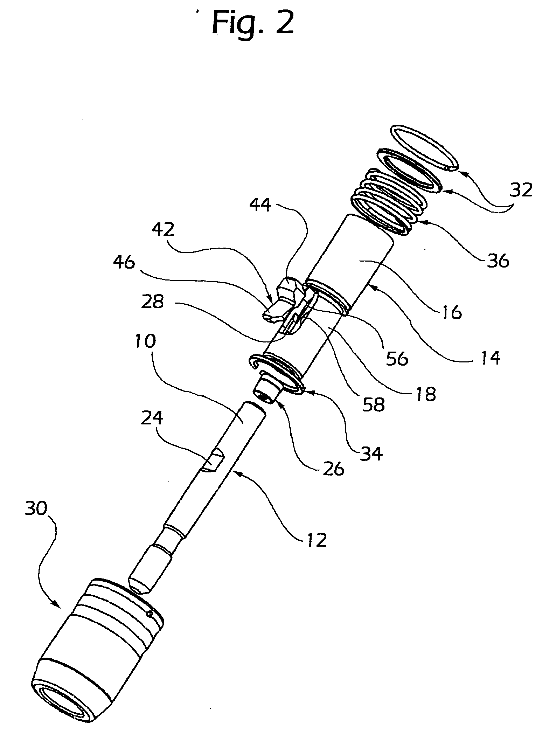

Figure 2 is an exploded perspective view of the chuck of Figure 1;
Figure 3 is a section taken on the line II-II of Figure 1; and
Figure 4 is a sectioned view similar to that of Figure 3, illustrating the chuck in a different operating configuration.

A chuck for securing the shank 10 of a tapping tool 12 comprises a body 14 made up of a substantially cylindrical proximal portion 16 and a substantially cylindrical distal portion 18 having a smaller diameter than that of the proximal portion 16.

A cylindrical cavity 20 is formed in the central region of the proximal portion 16 and distal portion 18 of the body 14, extending longitudinally along the central axis 22 of the body 14. The distal end of the cavity 20 is open so as to be able to receive the shank 10 of the tool 12, a notch 24 being formed in the surface thereof. A pad 26 of an elastomeric material is fixed in the bottom of the cavity 20. A slot 28 is formed through the side wall of the body 14, in communication with the cavity 20.

A sleeve 30 is mounted externally on the body 14, for sliding coaxially along the axis 22. The sleeve is mounted thanks to first retaining means, in the shape of a pair of rings 32 projecting from the inner surface of the sleeve 30 and the outer surface of the body 14 at its proximal end, to second annular retaining means, in the form of a ring 34 protruding from the outer surface of the body 14, and to a resilient member in the form of a coil spring 36 fixed between the retaining means. First and second annular grooves 38, 40 are also formed in the internal surface of the sleeve 30. The first groove 38 has a rectangular trapezium shape in cross-section, while the second groove 40 has a rectangular shape in section.

A retaining member 42 is housed with longitudinal play in the slot 28. It has first and second arms 44, 46, the outwardly facing portions of which - that is facing towards the sleeve - have oppositely inclined portions in cross section. In particular, in cross section these portions of the first and second arms 44, 46 are in the shape of a rectangular trapezium and a right-angled triangle respectively. The inclined side 48 of the trapezium and the hypotenuse 50 of the triangle meet in the form of a V at a point 52 of the mid-region of the retaining member. The distal end of the second arm 46 also has a recess 54 in its inwardly facing portion.

The retaining member 42 also has a protuberance 56 on the inwardly facing surface of the first arm 44, able to penetrate into the cavity 20. In cross section, this protuberance 56 is substantially in the shape of an isosceles trapezium the width of which is less than that of the arms 44, 46.

The slot 28 has a supporting rim 58 around its perimeter facing the first arm 44, which leaves a free space of the same width as that of the protuberance 56. This latter can thus protrude into the cavity 20, while the arm 44 is prevented from penetrating the cavity by the supporting rim 58 of the slot 28.

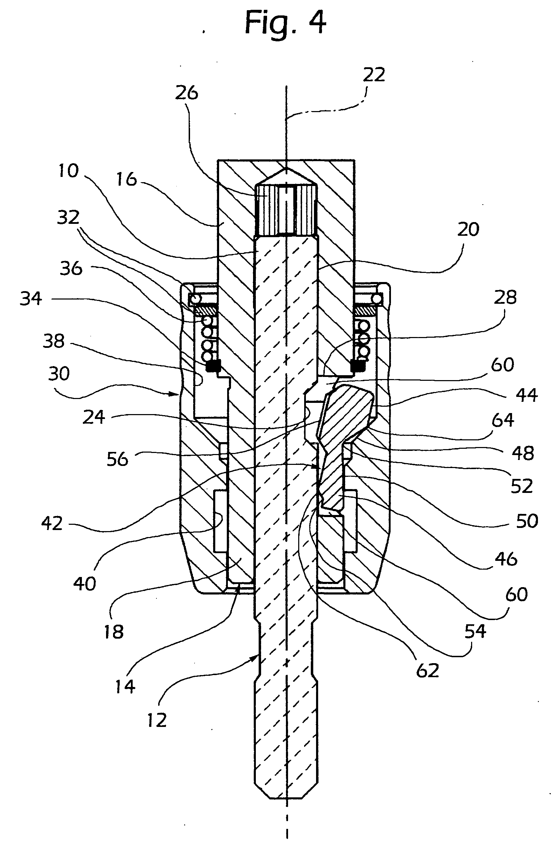

In the usual working configuration of the chuck (see Figure 3), the distal portion of the second arm 46 of the retaining member 42 is located in the second groove 40 in the sleeve 30, while the protuberance 56 extends into the cavity 20 of the body 14, and into the notch 24 in the shank 10. In this configuration, the shank 10 is secured to the chuck but has a limited range of axial movement thanks to the fact that the retaining member 42 is housed in the slot 28 with longitudinal play 60 and can therefore move through a distance at most corresponding to this play 60.

In order to disengage the shank 10 from the chuck, the sleeve 30 must be moved towards the distal portion of the body 14, against the resistance of the spring 36. Following this movement (see Figure 4), the edge delimiting the proximal end of the second groove 40 interferes with the hypotenuse 50 of the triangle of the portion of the second arm 46 facing the sleeve 30. Consequently the retaining member 42 pivots on its inwardly facing distal edge 62, whereby the outer portion of the first arm 44 enters into the first groove 38 in the sleeve 30, while the protuberance 56 moves out of the cavity 20 in the body 14 and disengages from the notch 24 in the shank 10. This latter is therefore free of restraint and can be extracted from the cavity 20 by pulling its projecting portion.

In order to secure the shank 10 back in the cavity 20, it is sufficient to allow the spring 36 to urge the sleeve 30 back towards the proximal portion 16 of the body 14. Following this movement, the inclined side of the perimeter of the first groove 38 interferes with the edge 64 formed by the inclined side and the shorter base of the portion of the first arm 44 facing the sleeve 30. The retaining member 42 consequently pivots about its edge 62, but in the opposite direction from before, whereby the outer portion of the second arm 46 enters into the second groove 40 in the sleeve 30, while the protuberance 56 enters the cavity 20 of the body 14, engaging the notch 24 in the shank 10.

The operations for securing and releasing the shank 10 with respect to the chuck are therefore simple, requiring only that the sleeve 30 be slid axially relative to the body 14, thereby causing the desired radial movement of the retaining member 42.

At the same time, while the structure of the chuck includes only the sole basic components needed to secure or release the tool, the longitudinal play 60 permits the shank 10 to perform a limited range of axial movement. This possibility is highly useful, for example when reversing the rotation of the tapping tool.

Naturally, the principle of the invention remaining unchanged, manufacturing details and embodiments may vary widely from those described purely by way of non-limitative example, without departing thereby from the scope of the claimed invention.

## Claims

1. A chuck for securing the shank (10) of a tapping tool (12), comprising:
a body (14) having a cavity (20) extending longitudinally along an axis (22), open at one end and able to house the said shank (10), a slot (28) being formed in the side wall of the body (14) in communication with the said cavity (20),
a sleeve (30) mounted on the outside of the said body (14) for sliding coaxially along the said axis (22), and
a retaining member (42) housed with longitudinal play (60) in the said slot (28) and having a protuberance (56) on its inwardly facing surface for penetrating into the said cavity (20), the said retaining member (42) being able to interfere by means of at least part of its outwardly facing surface with the internal surface of the sleeve (30), thereby causing the said protuberance (56) to penetrate into the said cavity (20) and, respectively, also to withdraw it, as a result of longitudinal sliding movements of the sleeve (30).

2. A chuck according to Claim 1, in which the said retaining member (42) has first and second arms (44, 46), the profiles in cross section of the respective portions thereof facing towards the sleeve (30) having oppositely inclined portions meeting in a V at a point (52) of the mid-region area of the retaining member (42).

3. A chuck according to Claim 2, in which the portions the of the said first and second arms (44, 46) facing the sleeve (30) have cross sections substantially in the shape of a rectangular trapezium and a right-angled triangle respectively, the inclined side (48) of the trapezium and the hypotenuse (50) of the triangle being oppositely inclined and meeting in a V at the said point (52).

4. A chuck according to Claims 2 or 3, in which the distal end of the second arm (46) has a groove (54) in its inwardly facing portion.

5. A chuck according to any preceding Claim, in which first and second grooves (38, 40) are formed in the inner surface of the said sleeve (30) for receiving respective portions of the said first and second arms (44, 46).

6. A chuck according to Claim 5, in which the said first groove (38) is shaped as a rectangular trapezium in cross section and the said second groove (40) is shaped as a rectangle in cross section, the inclined side of the perimeter of the first groove (38) being able to interfere with the edge (64) formed by the inclined side and the shorter base of the portion of the first arm (44) facing the sleeve (30), and the edge delimiting the proximal end of the second groove (40) being able to interfere with the hypotenuse (50) of the right-angled triangle of the portion of the second arm (46) facing the sleeve (30).

7. A chuck according to any preceding Claim, in which in cross section the said protuberance (56) on the retaining member (42) is substantially in the shape of an isosceles trapezium and is formed on the first arm (44).

8. A chuck according to any Claim from 2 to 7, in which the said slot (28) has a supporting rim (58) around the perimeter facing the first arm (44), leaving a free space of the same width as that of the protuberance (56).

9. A chuck according to any preceding Claim, in which first annular retaining means protrude from the internal surface of the sleeve (30) and the outer surface of the body (14) at the proximal end thereof, and second annular retaining means protrude from the outer surface of the body (14), a resilient member being secured between the said first and second retaining means.

10. A chuck according to any preceding Claim, in which the said body (14) is formed from a substantially cylindrical proximal portion (16) and a substantially cylindrical distal portion (18) which has a smaller diameter than that of the proximal portion (16), and in which the said cavity (20) is cylindrical and formed in the central region of the proximal portion (16) and the distal portion (18) of the body (14).

11. A chuck according to any preceding Claim, in which a pad (26) of an elastomeric material is fixed in the bottom of the said cavity (20).

12. An assembly comprising a chuck according to any of the preceding Claims and at least one tapping tool (12) with a shank (10) having a notch (24) formed in it.
